# EUROPEAN PATENT APPLICATION

(11) **EP 4 613 348 A1**
(43) Date of publication of application: **10.09.2025**
(21) Application number: 24161933.7
(22) Date of filing: 07.03.2024
(51) Int. Cl.: B01D 1/00, B01D 1/22, B01D 3/00

(54) **A UREA STRIPPER**

(71) Applicant: Yara International ASA, 0277 Oslo (NO)
(72) Inventor: Porro, Lino Giovanni, 1040 Etterbeek (BE); Paci, Giulio, 05035 Terni (IT); Brouwer, Mark, 6123BA Maastricht (NL)
(74) Representative: De Clercq & Partners

(57) **Abstract**

The present disclosure is related to the field of urea production, in particular urea strippers for removing ammonium carbamate, ammonia, and carbon dioxide from an aqueous urea solution comprising urea, ammonium carbamate, ammonia, and carbon dioxide, the urea stripper a plurality of electric heating elements.

## Description

### Field of the disclosure

The present disclosure is related to the field of urea production, in particular urea strippers.

### Background information

Urea is one of the most important chemicals industrially produced today, around 200 million tons of urea are produced worldwide every year. Most of it (above 90% of total production) is used as a fertilizer in agriculture as a nitrogen source. Urea is produced by reacting ammonia (NH₃) and carbon dioxide (CO₂) in a two-step process: first, two molecules of ammonia react with one molecule of carbon dioxide to form ammonium carbamate (H₂N-COONH₄); secondly, ammonium carbamate, which will be referred to as carbamate in the remainder of this document, decomposes into urea and water. Carbon dioxide and ammonia are mixed under high pressure and high temperature in a container, called a urea reactor or urea synthesis reactor.

However, the decomposition of ammonium carbamate into urea and water never goes to completion due to the thermodynamics and kinetics of the reaction, and a urea solution comprising urea, ammonium carbamate, free ammonia, and water is obtained at the outlet of the reactor. The urea solution is purified in several steps in order to remove the ammonium carbamate, unreacted ammonia, and water, and obtain a concentrated urea melt. In some of these steps, the ammonium carbamate, herein referred to as carbamate, is forced to decompose back to ammonia and carbon dioxide. Since ammonia and carbon dioxide are gases, it is easy enough to remove these from the urea solution. One important step to remove an important quantity of carbamate and free ammonia from the urea solution produced by the urea reactor is performed in a device called urea high pressure (HP) stripper, or simply urea stripper, working at a pressure very close to the urea reactor.

In a urea stripper, the urea solution from the urea reactor is heated up, and this leads the ammonium carbamate comprised in the urea solution to decompose back into ammonia and carbon dioxide. The heat is conventionally provided by medium pressure steam, which is usually produced by burning fossil fuels to heat up water. This burning generates large amounts of carbon dioxide that are released in the atmosphere. Carbon dioxide is a greenhouse gas, and there is a constant requirement from authorities and customers to reduce the carbon footprint of fertilizer production, such as urea.

### Summary of the disclosure

A new design for a urea stripper has been found that does not require an input of medium-pressure steam to decompose ammonium carbamate present in a urea solution. The urea stripper uses electricity as heat source.

In a first aspect, the present disclosure is related to a urea stripper for removing ammonium carbamate, ammonia, and carbon dioxide from a first aqueous urea solution comprising urea, ammonium carbamate, ammonia, and carbon dioxide, the urea stripper comprising:
- a vertical body comprising a top end and a bottom end joined by a wall, the vertical body comprising a liquid inlet, a gas outlet located at the top end of the vertical body, a gas inlet, and a liquid outlet located at the bottom end of the vertical body;
- a plurality of electric heating elements wherein the electric heating elements are positioned vertically in said vertical body, the gas inlet being located below the electric heating elements;
- a horizontal plate located above the electric heating elements , wherein the surface of the plate is equal to from 90% to 100% of the surface of the cross-section of the vertical body, the horizontal plate comprising through holes for allowing gases to reach the gas outlet and wherein the liquid inlet is positioned between the horizontal plate and the electric heating elements;
- each electric heating element being connected to one end of an electric wire, and the other end of the electric wire being connected to an electrical outlet located on the vertical body;
- a means for distributing an aqueous solution in the spaces between the electric heating elements, wherein the means is fluidly and directly connected to the liquid inlet.

In another aspect, the present disclosure provides a method for removing ammonium carbamate, ammonia, and carbon dioxide from an aqueous urea solution comprising urea, ammonium carbamate, ammonia, and carbon dioxide, the method comprising the steps of:
a) proving a urea stripper according to the present disclosure;
b) connecting the electrical outlet of the stripper to an electrical power source;
c) directing a gas stream comprising a passivation agent, and optionally a stripping gas to the gas inlet of the urea stripper;
d) directing a urea solution comprising urea, ammonium carbamate, ammonia, and carbon dioxide, to the liquid inlet of the urea stripper;
e) recovering a urea solution depleted of ammonium carbamate, ammonia, and carbon dioxide, from the liquid outlet of the stripper.

In another aspect, the present disclosure provides a method for producing a urea-based product with a reduced carbon footprint, the method comprising the steps of:
a) reacting ammonia and carbon dioxide in a synthesis reactor to produce a urea solution comprising urea, ammonium carbamate, ammonia, and carbon dioxide;
b) directing the urea solution produced by the synthesis reactor to a urea stripper according to the present disclosure;
c) removing ammonium carbamate, ammonia, and carbon dioxide from the urea solution in the urea stripper, thereby obtaining a urea solution depleted of ammonium carbamate, ammonia, and carbon dioxide, from the liquid outlet of the stripper;
d) further processing the urea solution depleted of ammonium carbamate, ammonia, and carbon dioxide, produced by the urea stripper into a finished liquid or solid urea-based product.

In another aspect, the present disclosure provides the use of a stripper according to the present disclosure for removing ammonium carbamate, ammonia, and carbon dioxide from a urea solution comprising urea, ammonium carbamate, ammonia, and carbon dioxide.

### Brief description of the figures

The following description of the figure of a specific embodiment of a system according to the present disclosure is only given by way of example and is not intended to limit the present explanation, its application or use. In the figure, identical reference numerals refer to the same or similar parts and features.
Figure 1 shows an embodiment of a urea stripper according to the present disclosure.
Figure 2 shows another embodiment of a urea stripper according to the present disclosure.
Figure 3 shows two embodiments of a horizontal plate (17, 27) suitable to be comprised in a urea stripper according to the present disclosure.
Figure 4 shows a cross-section of another embodiment of a urea stripper according to the present disclosure.
Figure 5 shows the components of an electric heating element according to the present disclosure.
The following features and reference numerals are used in the figures: urea stripper (1), vertical body (2), liquid inlet (3), gas outlet (4), gas inlet (11), liquid outlet (5), plurality of electric heating elements (6), horizontal plate (7, 17, 27), electric wire (8), electrical outlet (9), means for distributing an aqueous solution (10), sealing ring (12), narrow end of the heating elements (13), space (14), side-plates (20), central plate (21) and groove (22).

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

As used herein, a stripper or urea stripper is a device configured to receive an aqueous solution comprising ammonium carbamate and to remove some of the ammonium carbamate from the aqueous solution by heating up the solution, such that ammonium carbamate decomposes into ammonia and carbon dioxide and leaves the solution. In some urea production technologies, a stripper may also be called a carbamate decomposer, a high-pressure decomposer, or an ammonia stripper.

In a first aspect, the present disclosure is related to a urea stripper for removing ammonium carbamate, ammonia, and carbon dioxide from a first aqueous urea solution comprising urea, ammonium carbamate, ammonia, and carbon dioxide, the urea stripper comprising:
- a vertical body comprising a top end and a bottom end joined by a wall, the vertical body comprising a liquid inlet, a gas outlet located at the top end of the vertical body, a gas inlet, and a liquid outlet located at the bottom end of the vertical body;
- a plurality of electric heating elements wherein the electric heating elements are positioned vertically in said vertical body, the gas inlet being located below the electric heating elements;
- a horizontal plate located above the electric heating elements , wherein the surface of the plate is equal to from 90% to 100% of the surface of the cross-section of the vertical body, the horizontal plate comprising through holes for allowing gases to reach the gas outlet and wherein the liquid inlet is positioned between the horizontal plate and the electric heating elements;
- each electric heating element being connected to one end of an electric wire, and the other end of the electric wire being connected to an electrical outlet located on the vertical body;
- a means for distributing an aqueous solution in the spaces between the electric heating elements, wherein the means is fluidly and directly connected to the liquid inlet.

The urea stripper according to the present disclosure has a vertical top-to-bottom geometry. This means that the stripper is configured to receive a first aqueous urea solution comprising urea, ammonium carbamate, ammonia, and carbon dioxide, in its upper half, and that the first aqueous urea solution is pulled by gravity towards the bottom of the stripper.

The vertical body of the urea stripper comprises a top end and a bottom end joined by a wall, the body comprising a liquid inlet, a gas outlet located at the top end of the body, a gas inlet located below the heating elements, and a liquid outlet located at the bottom end of the body.

The vertical body may have a cuboid or cylindric shape. Cylindric shapes are usually preferred for large equipment in industrial chemical plants, in particular equipment working at high pressure, due to the absence of angles which are considered potential weakness points.

The vertical body is made of a material suitable for the operating conditions of the stripper. In particular, the internal parts of the stripper in contact with the carbamate solution in operation may be made of a stainless steel, an austenitic steel, a duplex austenitic-ferritic steel, such as Safurex^{®}, Uremium 29, and DP28W^{™}, or a superduplex austenitic-ferritic steel, for example a superduplex steel comprising at least 27 weight% of chromium. In some embodiments, the body of the stripper comprises elements produced by explosion welding, such as zirconium-superduplex materials, or zirconium-stainless steel 25-22-2. Stainless steel 25-22-2 is a type of austenitic stainless steel that comprises 25 weight% of chromium, 22 weight% of nickel, and 2 weight% of molybdenum.

The liquid inlet of the body is configured to receive a first aqueous urea solution comprising urea, ammonium carbamate, ammonia, and carbon dioxide, for example a solution produced by a urea synthesis reactor. The first aqueous urea solution may have a variable content of the different components depending on the technology used by the production plant, for example a reactor in a CO₂-stripping plant may produce a solution with a different composition than a reactor in a self-stripping plant.

The gas outlet located at the top end of the body is configured to allow gases, such as ammonia, carbon dioxide, and water vapor, to escape the urea stripper. Inside the stripper, the aqueous urea solution comprising urea, ammonium carbamate, ammonia, and carbon dioxide, is heated up which leads the ammonium carbamate to decompose into ammonia and carbon dioxide. These components then evaporate to the gas phase. The gas stream that exits the stripper via the gas outlet is usually recovered and re-injected in the production process to increase the yield of the plant. The gas stream injected in the gas inlet of the stripper comprising a passivation agent, and optionally a stripping gas, also leaves the stripper via the gas outlet.

In some embodiments, the gas outlet of the stripper is connected to a condenser that is configured to condense the gas stream comprising ammonia, carbon dioxide, and water vapor into an aqueous solution comprising ammonium salts, such as ammonium carbonate, ammonium bicarbonate, and ammonium carbamate.

The liquid outlet located at the bottom end of the body of the stripper is configured to allow the second aqueous urea solution depleted of ammonium carbamate, ammonia, and carbon dioxide, to exit the stripper. This second aqueous urea solution is then further processed into a liquid or solid urea-based finished product.

The urea stripper comprises a plurality of electric heating elements located inside the body. The electric heating elements are configured to provide energy, i.e., heat, to the aqueous urea solution to allow the decomposition of ammonium carbamate comprised in the aqueous urea solution into ammonia and carbon dioxide.

The electric heating elements may have a variety of design, form, and shape. In some embodiments, the electric heating elements have a rectangular cuboid shape. The dimensions of the electric heating elements depend on various factors, such as the flowrate of the first aqueous urea solution that the stripper is configured to process, the chemical composition of the first aqueous urea solution, and the size of the stripper.

The combined surface of the electric heating elements may be determined by the desired performance of the stripper, i.e., the amount of ammonium carbamate to be decomposed per unit of time or volume. By knowing the flow of aqueous solution directed to the urea stripper, the composition of the aqueous solution, and the desired composition at the liquid outlet of the stripper, it is possible to calculate the energy input required to decompose the desired amount of ammonium carbamate. By setting the temperature at which the electric heating elements are operating, it is possible to calculate the required surface of interaction between the liquid and the heating elements.

In some embodiments, the electric heating elements are positioned parallel with each other inside the body and at the same height. If the electric heating elements are positioned parallel with each other inside the body and at the same height, the gas and liquid flow inside the stripper may be easier to model and analyze. Modelling and analysis may be required to finetune the operating conditions of the stripper to obtain maximum efficiency.

In some embodiments, the height of the electric heating elements is from 50% to 90% of the height of the body. In order to optimize the size and capacity of the stripper, it may be an advantage to try to maximize the dimensions of the electric heating elements. All the dimensions of the electric heating elements are limited by the dimensions of the body of the stripper, as the electric heating elements are confined inside the body. In some embodiments, the height of the electric heating elements is ranging from 3.0 to 8.0 meters, or from 5.0 to 7.0 meters.

In some embodiments, all the electric heating elements have the same height with a tolerance of up to 5.0%, or up to 1.0%. Having electric heating elements of the same height ensures that all the aqueous urea solution injected in the stripper is in contact in the same amount of time with an electric heating element. This ensures that the local streams of aqueous solutions that reach the bottom of the stripper have the same composition. Depending on the geometry of the body of the stripper, it may not be possible for all the electric elements to have the same dimensions, in particular the same length.

In some embodiments, an electric heating element has a rectangular cuboid shape. In some embodiments, an electric heating element comprises two rectangular plates welded to each other. The electric heating elements may be made of, coated or cladded with a material resistant to the conditions of the stripper, in particular resistant to corrosion by an aqueous solution comprising ammonium carbamate. The electric heating elements should also be able to accommodate an electric wire, which provides the electricity required to heat up the heating element. A simple and efficient way to solve these issues is to weld together two plates, such as two rectangular plates of the same dimensions. One or both plates may comprise a groove on its internal face, i.e., the face configured to be welded to the other plate, to accommodate said electric wire. The plates are welded using known techniques in the field, such as tungsten inert gas (TIG) welding.

In some embodiments, an electric heating element comprises three plates, in particular three rectangular plates, welded together. It may be necessary to use three plates to build an electric heating element, for example if each individual plate has a thickness below 5 mm, or if the required groove is too high compared to the thickness of the plate. It is possible for an electric heating element to comprise three welded plates. The two outside plates would be groove-free, and the plate in the middle welded to the two outside plates comprises a groove suitable to accommodate an electric wire.

In some embodiments, an electric heating element has a thickness of 10 to 20 mm. In some embodiments, an electric heating element has a rectangular cuboid shape and comprises two rectangular plates, each with a thickness of 5 to 10 mm, welded to each other. It was found that a thickness of 10 to 20 mm provides a good resistant to corrosion without occupying too much space in the stripper.

In some embodiments, the electric heating elements comprise cladded elements, for example cladded plates. Cladding is a technique for joining two metals. It may be an advantage to use plates in carbon steel cladded with a corrosion-resistant material, such as an austenitic steel, a duplex austenitic-ferritic steel, titanium, and zirconium. Carbon steel plates are much cheaper than other materials, but they are not resistant to carbamate corrosion. Using cladding to apply a corrosion-resistant material may lower the overall cost an electric heating element. In some embodiments, the corrosion-resistant material may be applied on carbon steel plates by welding. The cladded elements may also be made of an austenitic or superduplex austenitic stainless steel cladded with an even more corrosion resistant material, such as zirconium.

In some embodiments, the distance between two nearest electric heating elements is constant throughout the stripper with a tolerance of 1.0%. It may be an advantage for the operation of the stripper that the electric heating elements are evenly distributed inside the stripper. An even distribution of the elements allows an even distribution of the gases flowing inside the stripper and that the pressure inside the stripper is constant within a cross-section of the stripper. A perfect even distribution may be difficult to achieve due to constraints in the stripper, but it is estimated that if the distance between two nearest electric heating elements does not vary more than 1.0% across the stripper, the distribution of the electric heating elements can be considered even.

In some embodiments, the distance between two nearest electric heating elements is from 5 to 25% of the diameter of the body. Two nearest electric heating elements have a minimum distance separating them to allow a film of aqueous solution to fall towards the bottom of the stripper and to allow for gases, such as ammonia, carbon dioxide, and water vapor, to rise to the top of the stripper. A large distance between two nearest electric heating elements is not desirable because this would represent a waste of space inside the stripper.

In some embodiments, the distance between two nearest electric heating elements is ranging from 10 to 200 mm. The larger the distance between two heating elements, the more space is left for the liquid to occupy in the stripper, thereby reducing the risk of flooding the stripper. An episode of flooding refers to an incident where the liquid level inside the stripper reaches the liquid inlet of the stripper.

Each electric heating element is connected to one end of an electric wire, and the other end of the electric wire is connected to an electrical outlet located on the body. The electric wire is configured to bring electrical power to the electric heating elements. The electric heating elements comprise a means capable of transforming electrical power into heat, such as an electrical resistance or a heating electrical cable.

In some embodiments, the stripper comprises only one electrical outlet on its body, and all the electric heating elements are connected to the electrical outlet. In some embodiments, the stripper comprises more than one electrical outlet, such as 2, 3, 4, 5, 6, 7, or 8 electric outlets, on its body, and each the electric heating elements is connected to an electrical outlet.

In some embodiments, the stripper comprises one or more heating elements configured to use steam as heat source. The stripper may comprise two types of heating elements: electric- and steam-heated. A purely electric stripper may require more electricity than available at the plant at all time or in some instances, for example if the urea production plant is connected to renewable electricity sources, such as solar panels, and windmills, these sources cannot deliver the same power all the time, it may be preferred to only partially electrify the stripper to ensure continuous operations.

The urea stripper according to the present disclosure comprises a horizontal plate located above the electric heating elements and the liquid inlet, wherein the surface of the plate is equal to from 90% to 100% of the surface of the cross-section of the body, the horizontal plate comprising through holes for allowing gases to reach the gas outlet.

To ensure an optimal operation of the stripper, an important parameter is local pressure inside the stripper, in particular in the spaces between two electric heating elements. It is highly desirable that the pressure inside the stripper across a cross-section of the stripper is as constant as possible. This ensures that the stripping conditions are identical across the stripper, and that a maximum stripping effect is obtained. The stripper comprises a single gas outlet, that may be in the center of the top end of the stripper. In the absence of a perforated plate, the pressure around the center of the stripper would be different than the pressure on the periphery of the stripper creating unequal stripping conditions.

The plate is horizontal, said otherwise, the angle between the plate and the wall of the stripper is 90° with a tolerance of 2°.

In order to create a constant pressure across a cross-section of the stripper, the horizontal plate is occupying at least 90% of the surface of the cross-section of the stripper. It may not be possible, for example for practical reasons, or necessary for the plate to cover 100% of the surface of the cross-section of the stripper.

The horizontal plate may be made of a stainless steel, an austenitic steel, or a duplex austenitic-ferritic steel.

The horizontal plate comprises through holes for allowing gases to reach the gas outlet. The through holes allow for the gases that evaporate or escape the aqueous urea solution to reach the gas outlet of the stripper and exit the stripper. The position, size, and shape of the through holes influence the profile of the pressure inside the stripper and they can be modified depending on the operating parameters of each stripper.

In some embodiments, the through holes have a rectangular shape or a circular shape.

In some embodiments, the though holes are located above a space between two electric elements or between an electric element and the wall of body.

In some embodiments, the combined surface of the through holes represent from 20 to 80% of the surface of the horizontal plate. Said otherwise, the surface of free area of the horizontal plate for the gases to go through the horizontal plate represent from 20 to 80% of the surface of the horizontal plate.

In some embodiments, the horizontal plate is located from 10 to 300 mm above the electric heating elements.

The stripper according to the present disclosure comprises a means for distributing the first aqueous urea solution in the spaces between the electric heating elements, wherein the means is fluidly and directly connected to the liquid inlet. The first aqueous urea solution enters the stripper via an inlet and needs to be distributed to the electric heating elements to ensure optimal heating and stripping of the solution.

Various means can be used to distribute the first aqueous urea solution to the plurality of electric heating elements, such as sprayers. The stripper may contain one or more means for distributing the first aqueous urea solution, such as one or more sprayers or spraying nozzles.

In some embodiments, the stripper comprises a means, such as a liquid sprayer, for distributing the solution in each interval between two nearest electric heating elements. This number increases the cost of the stripper and its complexity, but it allows a very good distribution of the first aqueous urea solution across all the electric heating elements.

In some embodiments, the stripper comprises several liquid sprayers for distributing the urea solution in each interval between two nearest electric heating elements. The liquid sprayers are connected to the liquid inlet to receive the urea solution to heat in the stripper.

In some embodiments, the liquid inlet of the stripper is fluidly connected to several distribution lines, each distribution line being located between two electric heating elements, or between one electric heating element and the wall of the stripper, wherein each distribution line comprises one or more liquid sprayers to spray the urea solution onto the electric heating elements.

In some embodiments, the means for distributing the solution are configured to create a falling film on the electric heating elements.

The body also comprises a gas inlet located below the heating elements. It may be an advantage to inject a gas stream at the bottom of a urea stripper. In some embodiments, the gas inlet is configured to direct a gas stream comprising a stripping gas, such as carbon dioxide. The presence of a stripping gas inside the urea stripper reduces the partial pressure of ammonia, thus accelerating its transfer from the liquid phase to the gas phase. Injecting a gas that is used in the synthesis of urea, i.e., carbon dioxide, is also a way to inject the required gas inside the synthesis loop instead of adding directly into the synthesis reactor. The gas inlet may be configured to receive a gas stream comprising carbon dioxide.

In some embodiments, the gas inlet is configured to receive a gas stream comprising a passivation agent, in particular oxygen.

In some embodiments, the gas inlet is configured to receive a gas stream comprising air or consisting of air. The oxygen comprised in air may act as a passivation agent in the urea stripper and urea plant.

In some embodiments, the gas inlet is fluidly connected to a gas outlet of a synthesis reactor.

In some embodiments, the stripper comprises only one electric wire, which is connected to all the electric heating elements. The electric wire may be configured to provide electricity to the heating elements, such that they can generate heat. The electric wire may be configured to support the electric load required to provide enough electricity to all the electric heating elements of the stripper.

In some embodiments, the stripper comprises more than one electric wire, wherein each electric wire is connected to one or more electric heating element. Several electric wires may enable an inhomogeneous temperature profile of the electric heating elements inside the stripper.

In some embodiments, an electric heating element is made of two plates welded together, wherein at least one plate comprises a groove for housing an electric wire. Electric heating elements can be manufactured in a number of ways known in the art. It may be an advantage to build these elements by welding two plates together, such that the design of the groove configured to house the electric wire can be customized to the requirements of each stripper.

In some embodiments, the stripper comprises a sealing ring connected to its internal wall, such that no gas can flow from the bottom of the stripper to its top between the wall of the stripper and the end of an electric heating element. The sealing ring ensures that gas flowing from the bottom of the stripper to its top has to flow counter-current and next to the liquid falling from the top of the stripper.

In some embodiments, the gas outlet of the urea stripper is fluidly connected to a carbamate condenser, such as a high-pressure carbamate condenser, or a medium high-pressure carbamate condenser, and the carbamate condenser is configured to condense the gas stream produced by the stripper and comprising ammonia, water, and carbon dioxide into an aqueous solution comprising ammonium salts.

In another aspect, the present disclosure provides an assembly comprising a urea stripper according to the first aspect of the present disclosure and a carbamate decomposer, wherein the gas outlet of the urea stripper is fluidly connected with the carbamate decomposer.

In another aspect, the present disclosure provides a urea production plant comprising a urea stripper according to the first aspect of the present disclosure. A urea production plant comprising a stripper according to the present disclosure has a much lower greenhouse gas emission than a conventional plant comprising a stripper provided with steam obtained by burning fossil fuel. The urea production plant comprises elements conventionally present in all urea production plants, such as a synthesis section, the synthesis section comprising a reactor, a urea stripper according to the present disclosure, and a high-pressure carbamate decomposer, a decomposition section, an evaporation section, a finishing section to produce a final liquid or solid urea-based composition, a recovery section, and a wastewater treatment section.

In another aspect, the present disclosure provides an ammonia and urea production plant comprising a urea stripper according to the first aspect of the present disclosure. Urea production plant require a large amount of ammonia for its operation, so it is common for urea production plants to comprise their own ammonia production unit. An ammonia and urea production plant comprising a stripper according to the present disclosure has a much lower greenhouse gas emission than a conventional plant comprising a stripper provided with steam obtained by burning fossil fuel.

In another aspect, the present disclosure provides a stand-alone urea production plant comprising a urea stripper according to the first aspect of the present disclosure. A stand-alone urea production plant refers to a plant that receives feeds of ammonia and carbon dioxide from external sources. A stand-alone urea production plant does not comprise an ammonia-production unit. Conventional urea plants comprise an ammonia production unit to produce the ammonia and carbon dioxide required for urea synthesis. An ammonia-production unit is also a net producer of steam, whereas a urea-production unit is a net consumer of steam, and a conventional urea stripper using steam as heat source is the main steam-consuming device in a urea-production unit. By using a stripper according to the present disclosure that only requires electricity, the urea-production unit does not require an external supply of steam, so an ammonia-production unit is less interesting. Ammonia production is also becoming electrical using water electrolysis and such production does not produce steam. The urea-production unit may receive its feedstock, ammonia and carbon dioxide, by various means, such as pipes, ships, trucks, and may not require to be coupled to an ammonia-production unit.

In another aspect, the present disclosure provides a method for removing ammonium carbamate, ammonia, and carbon dioxide from an aqueous urea solution comprising urea, ammonium carbamate, ammonia, and carbon dioxide, the method comprising the steps of:
a) proving a urea stripper according to the present disclosure;
b) connecting the electrical outlet of the stripper to an electrical power source;
c) directing a gas stream comprising a passivation agent, and optionally a stripping gas to the gas inlet of the urea stripper;
d) directing a urea solution comprising urea, ammonium carbamate, ammonia, and carbon dioxide, to the liquid inlet of the urea stripper;
e) recovering a urea solution depleted of ammonium carbamate, ammonia, and carbon dioxide, from the liquid outlet of the stripper.
The urea stripper described above may be used for removing ammonium carbamate, ammonia, and carbon dioxide from an aqueous urea solution comprising urea, ammonium carbamate, ammonia, and carbon dioxide. First, the electrical outlet of the stripper must be connected to an electrical power source, such as the electrical grid, a generator, or a power plant. This starts heating the electric heating elements of the stripper. The heating elements need to reach a certain temperature depending on the parameters of the stripper, such as the material of the electric heating elements, and the urea-producing plant that it belongs to, before the first urea solution comprising urea, ammonium carbamate, ammonia, and carbon dioxide, is directed to the liquid inlet of the urea stripper.

In some embodiments, step b) is performed such that the temperature of the external side of the electric heating elements is ranging from 190 to 250 °C.

A gas stream comprising a stripping gas with/or a passivation agent is directed to the gas inlet of the urea stripper before the introduction of the first urea solution. The gas stream comprising a stripping gas, such as carbon dioxide, may increase the transfer of ammonia from the liquid phase to the gas phase and increase the performance of the stripping. A gas stream comprising a passivation agent, such as air, is protecting the internal part of the stripper, in contact with corrosive fluids. The flow of the stripping gas is determined by several factors including production rate of the plant, size of the stripper. The flow of passivation air is determined by the minimum quantity of oxygen required for the passivation of the stripper.

The first urea solution is distributed inside the stripper to the plurality of electric heating elements, creating a film on the surfaces of the electric heating elements. Upon contact between the first urea solution and the electric heating elements, the ammonium carbamate comprised in the first urea solution starts to decompose into ammonia and carbon dioxide, which then transfer to the gas phase and exit the stripper via the gas outlet.

The urea solution migrates down as a liquid film on the surface of the electric heating elements due to gravity and reaches the bottom of the stripper, where it exits the stripper via the liquid outlet of the stripper.

The aqueous urea solution leaving the stripper via the liquid outlet is named the second aqueous urea solution. The second aqueous urea solution may still comprise ammonium carbamate, ammonia, and carbon dioxide, as it is difficult to fully remove these components from the first aqueous urea solution, but the content of these components in the second aqueous urea solution is much lower than in the first aqueous urea solution that enters the stripper.

In some embodiments, the pressure inside the stripper is above 10 MPa or 100 bar in operation. The stripper may be used as a high-pressure stripper, which operate at pressures above 10 MPa or 10 bar in all urea production technologies.

In some embodiments, the pressure inside the stripper is ranging from 8 to 10 MPa or from 80 to 100 bar. The stripper may be used as a medium high-pressure stripper, which operate at pressures is ranging from 8 to 10 MPa or from 80 to 100 bar in some urea production technologies.

In some embodiments, the first aqueous urea solution comprises from 25 to 35 weight% of ammonium carbamate, from 0 to 10 weight% of free ammonia, and from 30 to35 weight% of urea, and water in balance. In some embodiments, the first aqueous urea solution consists of urea, free ammonia, ammonium carbamate, and water.

In some embodiments, the second aqueous urea solution comprises from 40 to 60 weight% of urea, from 10 to 25 weight% of ammonium carbamate, from 0 to 20 weight% of free ammonia, and the remaining being water.

In some embodiments, the second aqueous urea solution comprises from 40 to 60 weight% of urea, from 10 to 25 weight% of ammonium carbamate, from 0 to 20 weight% of free ammonia, and from 5 to 50 weight% of water.

In another aspect, the present disclosure provides a method for producing a urea-based product with a reduced carbon footprint, the method comprising the steps of:
a) reacting ammonia and carbon dioxide in a synthesis reactor to produce a urea solution comprising urea, ammonium carbamate, ammonia, and carbon dioxide;
b) directing the urea solution produced by the synthesis reactor to a urea stripper according to the present disclosure;
c) removing ammonium carbamate, ammonia, and carbon dioxide from the urea solution in the urea stripper, thereby obtaining a urea solution depleted of ammonium carbamate, ammonia, and carbon dioxide, from the liquid outlet of the stripper;
d) further processing the urea solution depleted of ammonium carbamate, ammonia, and carbon dioxide, produced by the urea stripper into a finished liquid or solid urea-based product.

The stripper disclosed in the present disclosure can be used in a production process for producing a liquid or solid urea-based product.

Solid urea-based products include solid products such as prills, granules, or pastilles, that comprise at least 1 weight%, and up to 100 weight% of urea.

Liquid urea-based products include liquid products, such as aqueous solutions, that comprise at least 1 weight% of urea. Diesel exhaust fluid (DEF) is a product used in diesel-powered cars to reduce nitrogen oxides emissions and is an aqueous solution comprising 32.5 weight% of urea. Another popular liquid product containing urea is a UAN solution, a solution comprising urea, water, and ammonium nitrate.

Urea-based products, in particular urea-based fertilizers, may contain additional nutrients required by crops, such as phosphorus, potassium, calcium, magnesium, sulfur, boron, iron, copper, manganese, molybdenum, and zinc.

To produce a urea-based product, ammonia and carbon dioxide are first reacted in a container, which can be called a urea synthesis reactor or urea reactor. This container produces a first aqueous urea solution comprising urea, ammonium carbamate, ammonia, and carbon dioxide. This aqueous urea solution is directed to a urea stripper according to the present disclosure. From this first aqueous urea solution, the urea stripper produces a second aqueous urea solution with a higher urea content and a lower content of ammonium carbamate, free ammonia, and carbon dioxide; and a gas stream comprising ammonia, carbon dioxide, and water vapor. The gas stream produced by the stripper is recycled to the synthesis reactor. The second aqueous urea solution is further processed to be purified, i.e., further decrease the content in ammonium carbamate, free ammonia, and carbon dioxide. The pure urea solution can be transformed into a urea-based product.

The production of solid urea-based products requires a solidification step, such as granulation, prilling, spheroidizing, or pastilling.

The production of liquid urea-based products may require the addition and mixing of other components, such as water, and ammonium nitrate.

In another aspect, the present disclosure provides the use of a stripper according to the present disclosure for removing ammonium carbamate, ammonia, and carbon dioxide from a urea solution comprising urea, ammonium carbamate, ammonia, and carbon dioxide.

In another aspect, the present disclosure provides a method for modifying a urea-production unit, the method comprising the step of replacing a urea stripper, in particular a urea stripper configured to use steam as heating source, with an electric stripper according to the present disclosure. Replacing a urea stripper, in particular a urea stripper configured to use steam as heating source, with an electric stripper according to the present disclosure drastically reduces the carbon footprint of the urea-production unit and of the urea-based composition produced by said unit.

In another aspect, the present disclosure provides a method for revamping a urea-production unit, the method comprising the step of replacing a urea stripper, in particular a urea stripper configured to use steam as heating source, with an electric stripper according to the present disclosure.

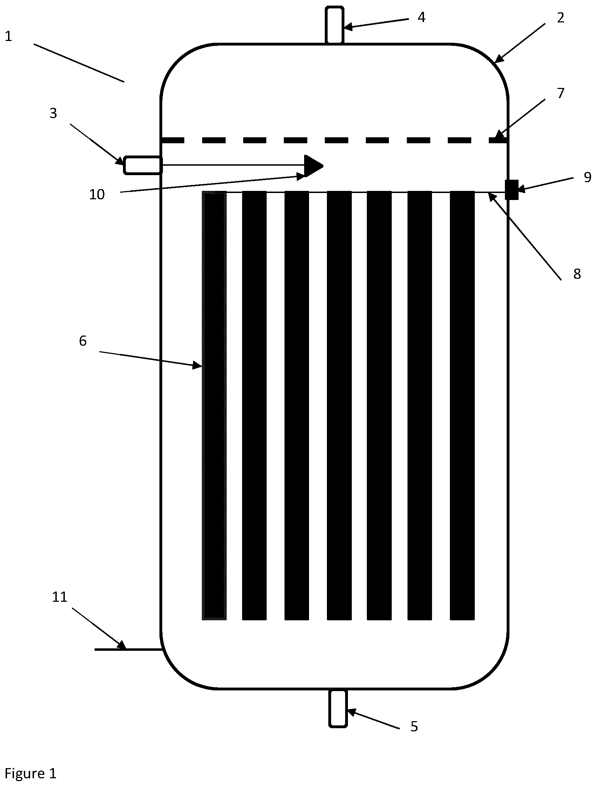

Figure 1 shows an embodiment of a urea stripper according to the present disclosure. The urea stripper (1) comprises:
- a vertical body (2) comprising a top end and a bottom end joined by a wall, the body (2) comprising a liquid inlet (3), a gas outlet (4) located at the top end of the body, a gas inlet (11) located below the heating elements, and a liquid outlet (5) located at the bottom end of the body (2);
- a plurality of electric heating elements (6), wherein the electric heating elements (6) are positioned parallel with each other inside the body (1) and at the same height;
- a horizontal plate (7) located above the electric heating elements (6) and the liquid inlet (3), wherein the surface of the plate (7) is equal to from 90% to 100% of the surface of the cross-section of the body (2), the horizontal plate comprising through holes for allowing gases to reach the gas outlet (4);
- each electric heating element (6) is connected to one end of an electric wire (8), and the other end of the electric wire (8) is connected to an electrical outlet (9) located on the body;
- a means (10) for distributing an aqueous solution in the spaces between the electric heating elements, wherein the means (10) is fluidly and directly connected to the liquid inlet (3).

The liquid inlet (3) is configured to be connected to a source of an aqueous urea solution, such as the outlet of a urea synthesis reactor, optionally via a pump. The gas outlet (4) is configured to let a gas stream comprising ammonia, carbon dioxide, and water vapor exit the stripper (1). The gas outlet (4) may be connected to a condenser to condense the gas stream exiting the stripper.

The liquid outlet (5) located at the bottom end of the body (2) is configured to allow an aqueous urea solution to exit the stripper.

The electric heating elements (6) are located below a perforated plate (7). The electric heating elements are configured to be connected to an electrical power source via the electrical socket (9). When connected to a power source, the electric heating elements transfer heat to an aqueous urea solution to perform the decomposition of ammonium carbamate into ammonia and carbon dioxide.

The gas inlet (11) is configured to receive a gas stream comprising a passivation agent and optionally a stripping gas, such as carbon dioxide.

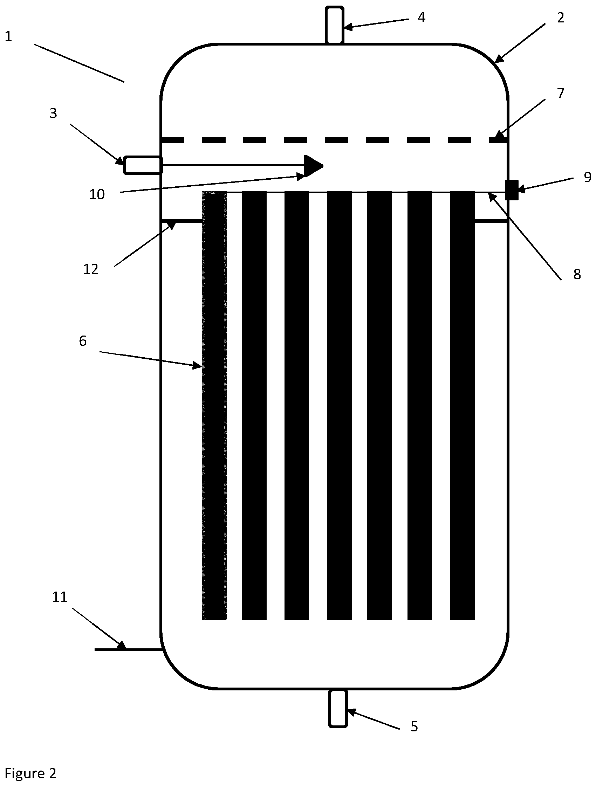

Figure 2 shows another embodiment of a urea stripper according to the present disclosure. The urea stripper (1) comprises the same elements as the stripper (1) in figure 1, and a sealing ring (12). The sealing ring connects the wall of the stripper to the outermost electric heating element. The sealing ring (12) ensures that gas cannot flow from the bottom of the stripper to its top between the wall of the stripper and the end of an electric heating element; the gas has to flow to the top alongside at least one electric heating element.

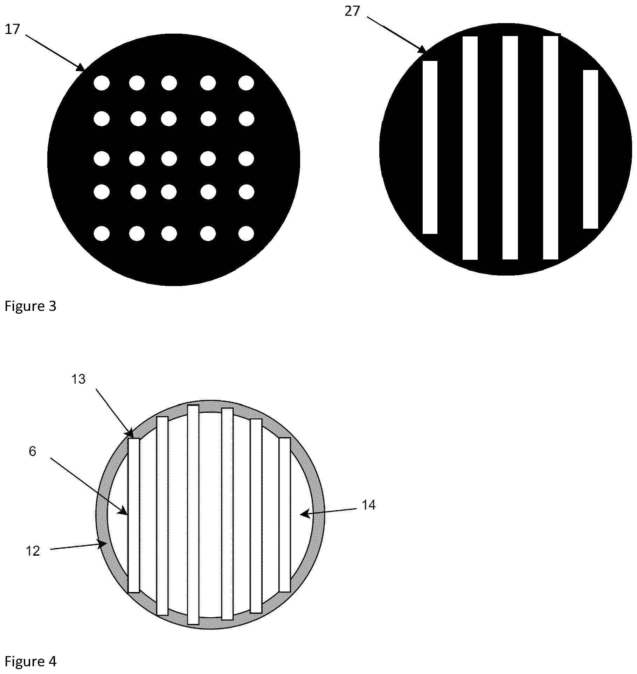

Figure 3 shows two embodiments of a horizontal plate (17, 27) suitable to be comprised in a urea stripper according to the present disclosure. On the left-hand side, the horizontal plate comprises circular holes (white circles) to allow gas from reaching the top of the stripper. On the right-hand side, the horizontal plate comprises rectangular holes (white rectangles) to allow gas from reaching the top of the stripper.

Figure 4 is a cross-section of another embodiment of a urea stripper according to the present disclosure. The stripper comprises electric heating elements (6) and a sealing ring (12). The sealing ring prevents the gas from flowing from the bottom of the stripper to the top between the narrow end (13) of the heating elements (6). The gas is allowed to flow between the wall and one electric heating element in the space (14).

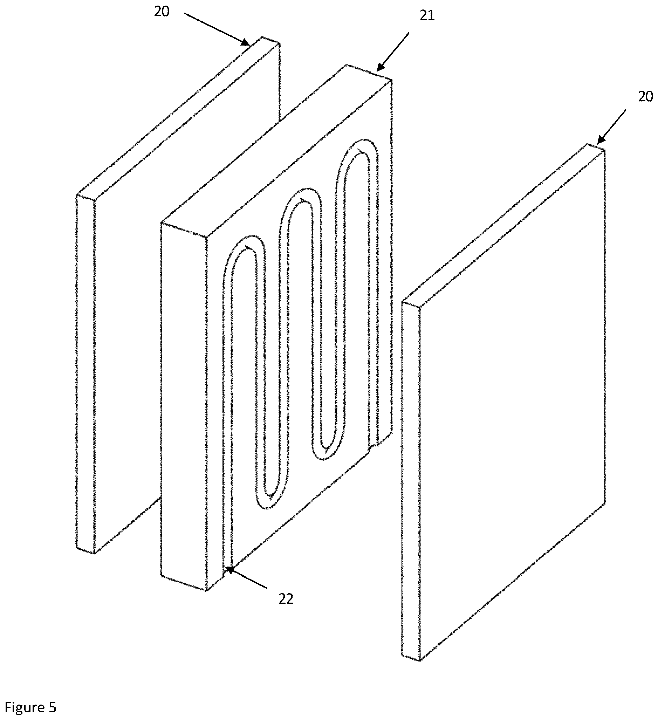

Figure 5 shows the components of an electric heating element according to the present disclosure. The electric heating element comprises two side-plates (20) that are configured to be welded to a central plate (21) comprising a groove (22) for accommodating an electric wire. The three plates (20, 21) can be made in carbon steel which is cheaper than corrosion-resistant steel, such as stainless steel and austenitic steel. After the three plates are welded together, a layer of corrosion-resistant material, such as austenitic steel, a duplex austenitic-ferritic steel, and a superduplex austenitic-ferritic steel can be added on all the external surfaces of the heating element by a suitable method, such as welding or cladding.

## Claims

1. A urea stripper (1) for removing ammonium carbamate, ammonia, and carbon dioxide from an aqueous urea solution comprising urea, ammonium carbamate, ammonia, and carbon dioxide, the urea stripper (1) comprising:
- a vertical body (2) comprising a top end and a bottom end joined by a wall, the vertical body (2) comprising a liquid inlet (3), a gas outlet (4) located at the top end of the vertical body (2), a gas inlet (11), and a liquid outlet (5) located at the bottom end of the vertical body (2);
- a plurality of electric heating elements (6) wherein the electric heating elements are positioned vertically in said vertical body (2), the gas inlet (11) being located below the electric heating elements (6);
- a horizontal plate (7) located above the electric heating elements (6), wherein the surface of the plate (7) is equal to from 90% to 100% of the surface of the cross-section of the vertical body (2), the horizontal plate comprising through holes for allowing gases to reach the gas outlet (4) and wherein the liquid inlet (3) is positioned between the horizontal plate (7) and the electric heating elements (6);
- each electric heating element (6) being connected to one end of an electric wire (8), and the other end of the electric wire (8) being connected to an electrical outlet (9) located on the vertical body (2);
- a means (10) for distributing an aqueous solution in the spaces between the electric heating elements, wherein the means (10) is fluidly and directly connected to the liquid inlet (3).

2. The urea stripper (1) according to claim 1, wherein the height of the electric elements (6) is from 50% to 90% of the height of the vertical body (2).

3. The urea stripper (1) according to claim 1 or 2, wherein the distance between two nearest electric heating elements is constant throughout the stripper.

4. The urea stripper (1) according to any one of claims 1 to 3, wherein the distance between two nearest electric heating elements is from 5 to 25% of the diameter of the vertical body (2).

5. The urea stripper (1) according to any one of claims 1 to 3, wherein the combined surface of the through holes represent from 20 to 80% of the surface of the horizontal plate (7).

6. The urea stripper (1) according to any one of claims 1 to 4, wherein the means (10) for distributing an aqueous solution in the spaces between the electric heating elements comprise a plurality of spraying nozzles.

7. The urea stripper according to any one of claims 1 to 4, wherein the horizontal plate (7) is located from 10 to 300 mm above the electric heating elements.

8. The urea stripper according to any one of claims 1 to 5, wherein the vertical body comprises a gas inlet (11) located below the heating elements.

9. The urea stripper according to any one of claims 1 to 6, wherein the urea stripper comprises only one electric wire (8) connected to all the electric heating elements (6).

10. The urea stripper according to any one of claims 1 to 4, wherein an electric heating element is made of two or three plates welded together, wherein at least one plate comprises a groove for housing an electric wire.

11. The urea stripper according to any one of claims 1 to 7, wherein the vertical body has a cylindric shape or a cuboid shape.

12. A method for removing ammonium carbamate, ammonia, and carbon dioxide from a urea solution comprising urea, ammonium carbamate, ammonia, and carbon dioxide, the method comprising the steps of:
a) proving a urea stripper according to any one of claims 1 to 11;
b) connecting the electrical outlet of the stripper to an electrical power source;
c) optionally, directing a gas stream comprising a stripping gas to the gas inlet of the urea stripper;
d) directing a urea solution comprising urea, ammonium carbamate, ammonia, and carbon dioxide, to the liquid inlet of the urea stripper;
e) recovering a urea solution depleted of ammonium carbamate, ammonia, and carbon dioxide, from the liquid outlet of the stripper.

13. A method for producing a urea-based product with a reduced carbon footprint, the method comprising the steps of:
a) reacting ammonia and carbon dioxide in a synthesis reactor to produce a urea solution comprising urea, ammonium carbamate, ammonia, and carbon dioxide;
b) directing the urea solution produced by the synthesis reactor to a urea stripper according to any one of claims 1 to 12;
c) removing ammonium carbamate, ammonia, and carbon dioxide from the urea solution in the urea stripper, thereby obtaining a urea solution depleted of ammonium carbamate, ammonia, and carbon dioxide, from the liquid outlet of the stripper;
d) further processing the urea solution depleted of ammonium carbamate, ammonia, and carbon dioxide, produced by the urea stripper into a finished liquid or solid urea-based product.

14. The use of a stripper according to any one of claims 1 to 11 for removing ammonium carbamate, ammonia, and carbon dioxide from a urea solution comprising urea, ammonium carbamate, ammonia, and carbon dioxide.
